# EUROPEAN PATENT SPECIFICATION

(11) **EP 2 583 015 B1**
(45) Date of publication and mention of the grant of the patent: **06.04.2016**
(21) Application number: 11727749.1
(22) Date of filing: 17.06.2011
(51) Int. Cl.: F16L 59/065

(54) **AN INSULATED FLUID DUCT**
ISOLIERTER FLÜSSIGKEITSKANAL
CONDUIT DE FLUIDE ISOLÉ

(30) Priority: 18.06.2010 GB 201010303
(43) Date of publication of application: 24.04.2013
(73) Proprietor: Spirax-Sarco Limited, Cheltenham, Gloucestershire GL53 8ER (GB)
(72) Inventor: MILLER, Jeremy, Cheltenham, Gloucestershire GL51 9NQ (GB); FRISBY, Ben, Cheltenham Gloucestershire GL53 9ES (GB); MASKREY, Adrian, Cheltenham Gloucestershire GL51 9NQ (GB); SPRACKLING, Simon, Cheltenham Gloucestershire GL51 9NQ (GB)
(74) Representative: McCartney, Jonathan William
(86) International application number: PCT/GB2011/051137
(87) International publication number: WO 2011/158040

(56) References cited:
- EP-A1- 0 043 423
- EP-A2- 1 624 242
- WO-A2-02/061327
- GB-A- 2 139 311
- GB-A- 2 326 210
- US-A- 4 046 407
- US-A1- 2008 296 890
- US-A1- 2009 184 100

## Description

### Field of the Invention

This invention relates to an insulated fluid duct for conveying fluids at temperatures above or below the ambient temperature. The present invention is concerned particularly, although not exclusively, with ducts for conveying hot fluids, such as steam.

### Background of the Invention

Many industrial companies maintain on site steam plants for generating steam and then distributing the steam to one or more locations at the site where the energy contained in the steam is extracted for use in various thermal processes.

To optimise the efficiency of the steam distribution systems used to convey steam around a site, steps are normally taken to reduce heat loss from the hot parts of the system. To this end, typically, insulating material is placed around the outer surfaces of the hot parts, including the steam ducts or pipes that carry the steam. As is known, the insulation material usually comprises mineral wool, fibreglass or calcium silicate and the like.

In certain of the industries that use steam plants, for example the pharmaceutical industry and the food and beverage industry, hygiene is of critical importance. In the pharmaceutical industry, steam is widely used in processes for producing pharmaceutical products and certain standards of cleanliness and purity, as usually mandated by regulations, must be adhered to.

Consequently, in "cleanroom" environments requiring pure and clean steam installations it is not acceptable to use conventional insulation materials because such materials risk contaminating the clean environment. In the context of the present invention, a "cleanroom" is an environment, typically used in manufacturing or scientific research, in which special measures are taken to ensure a low level of environmental pollutants such as dust, airborne microbes, aerosol particles and chemical vapors. Thus, a cleanroom has a controlled level of contamination that is specified by the number of particles per cubic meter at a specified particle size.

Cleanroom standards are specified by ISO 14644-1 and, for example, ISO classes 1 to 4 specify no particles larger than 0.5µm. For the purposes of the present invention, a cleanroom may be regarded as an environment in accordance with ISO classes 1 to 4, and preferably classes 1 and 2.

To date, it is common practice in such clean environments to leave the steam pipes, which are typically made from stainless steel, un-insulated. This lack of insulation can typically give rise to a heat loss of approximately 330 Watts per metre of pipe which, as clean environments are normally air conditioned, is usually balanced by an equal extra amount of air conditioning capacity.

This heat loss and the additional air conditioning usage it necessitates are uneconomical.

It is known, for example from DE3338465, GB2358055 and EP0104790, to insulate ducts for hot fluids by means of a vacuum. In such known proposals, the duct is a twin-walled duct, a vacuum being maintained in the space between the walls: The known ducts are used, for example, to convey steam underground in the oil industry to assist in the extraction of oil, or for conveying oil undersea from offshore locations.

WO 02/061327 A2 shows a duct section according to the preamble of claim 1.

A problem that arises is that failure of the vacuum, and the consequent loss of insulation performance, is not easily discernible unless complex and expensive monitoring equipment is provided at each insulated duct section. If a vacuum insulated steam line is to be employed in an above ground or above water environment, such as in a clean room, such a loss of insulation can cause an increase in the temperature of the clean room environment (or an increase in the air conditioning load) and a reduction in the temperature or quality of the steam, which may adversely affect the processes in which the steam is used and increase the load on the steam generating plant.

### Summary of the Invention

According to a first aspect of the present invention, there is provided a duct section for conveying a fluid, comprising an inner pipe for conveying the fluid, an outer pipe enclosing the inner pipe to define a space between the inner pipe and the outer pipe, and a connector communicating with the space for evacuating the space to provide thermal insulation for the inner pipe, characterised in that the external surface of the outer pipe is provided with a temperature-responsive indicator which is a heat sensitive paint or coating which remains in a first state while the temperature of the outer pipe lies within a predetermined temperature range and assumes a second state when the temperature of the outer pipe lies outside the predetermined temperature range.

The duct section may be a section of a steam line, so that the inner pipe is for conveying steam generated by a steam plant.

The predetermined temperature range may embrace the ambient temperature of the environment in which the duct section is situated, and the change in appearance may occur when the temperature of the second pipe rises above the ambient temperature. The change in appearance may be a change in colour.

The heat sensitive paint or coating may, for example, contain thermochromic liquid crystals. The paint or coating may be applied over substantially the entire outer surface of the outer pipe, or it may be confined to a specific visible area of the outer pipe. The indicator may incorporate a symbol or wording to signify failure of the vacuum, or may be in the form of a company logo or name. The indicator may be applied to the outer pipe over a background colour which corresponds to that of the indicator at ambient temperature, so that the indicator assumes a contrasting colour upon failure of the vacuum.

According to a second aspect of the present invention there is provided a duct comprising at least two duct sections in accordance with the first aspect of the invention connected end to end.

The duct sections may be connected by way of couplings engaging the inner pipes.

Such a duct or duct section is suitable for use in clean room environments because the vacuum provides sufficient thermal insulation for the fluid carrying first pipe that there is no need to place thermal insulation material, which might contaminate the clean room, around the second pipe. Consequently, according to a third aspect of the present invention there is provided a duct or duct section in a cleanroom, the duct or duct section being in accordance with the first or second aspect of the invention.

The duct may further comprise at least one getter for removing gas from the vacuum. By using a getter, molecules that outgas from the inner surfaces of the duct are removed from the vacuum, maintaining the vacuum at a level that provides sufficient thermal insulation for the first pipe.

### Detailed Description

An embodiment of the invention will now be described in detail, by way of example, with reference to the accompanying drawings, in which:
Figure 1 is a schematic side view illustrating the internal arrangement of sections of a duct section of a duct serving as a steam line;
Figure 2 illustrates a somewhat schematic sectional side view on a line Z - Z of the steam line shown in Figure 1;
Figure 3 illustrates a somewhat schematic sectional side view on a line Y - Y of the steam line shown in Figure 1;
Figure 4 illustrates a somewhat schematic perspective partial broken view of a steam line comprising an alternative expansion joint to that illustrated in Figure 1.

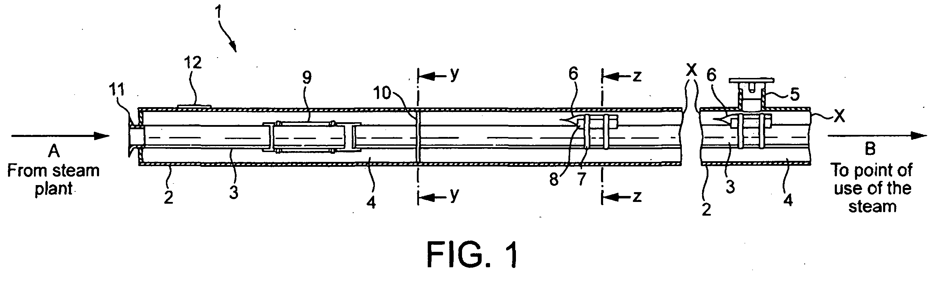

Referring first to Figure 1, there is illustrated a part of a duct section 1 forming part of a steam line for conveying steam, in the direction indicated by the arrows A and B, from a steam plant (not shown) including a boiler, to a location (not shown) where the steam is used in a thermal process. The duct section 1 may be of any length and Figure 1 shows a break between two different portions of the duct section, indicated by the lines labelled X. The steam line may for example be located in a clean room environment of a manufacturer and the steam conveyed by the steam line 1 used to sterilize goods or equipment.

The duct section 1 comprises an outer pipe 2 and an inner pipe 3. The inner pipe 3 is within the outer pipe 2 and the two are co-axial. Both the outer pipe 2 and the inner pipe 3 are metal, preferably stainless steel.

In use, the inner pipe 3 conveys the steam generated by the steam plant (not shown) as indicated by the arrows A and B. In a typical application, the steam will be at a pressure of 3.5 barg and a temperature of 148C. The sealed space 4 between the inner pipe 3 and the outer pipe 2 is a vacuum, and the pressure of the vacuum 4 is low enough to thermally insulate the steam carrying inner pipe 3, to reduce the amount of heat transferred to the outer pipe 3 and onwards into the surrounding environment. Advantageously, with this arrangement, heat loss from the duct section 1 is low and the outer surface of the outer pipe 2, which is not covered by any insulating material, is suitable for use in clean environments.

The space 4 may for example be sealed at each end of the duct section 1 by means of an end cap (not shown) having an aperture through which the inner pipe 3 passes and which is welded to the inner pipe 3 and the outer pipe 2 by metal weld joints (not shown. The welds between the inner pipe 3 and the end caps serve to hold the inner pipe 3 within the outer pipe 2.

The duct section 1 comprises a connector in the form of a pump port 5 for connecting to a vacuum pump (not shown). The duct section 1 is commissioned for operation using a preferred commissioning procedure that will be described in detail below. During this procedure, a vacuum pump (not shown) is connected to the pump port 5 and pumps air from the space 4 to generate the vacuum. A valve (not shown) seals the pump port 5 when the commissioning procedure is complete and the vacuum pump (not shown) is disconnected from the steam line 1.

In operation, the interior of the duct section 1 experiences a continual outgassing of molecules adsorbed on the various interior surfaces. The steam carrying inner pipe 3 reaches typical temperatures of 148°C and such temperatures increase the outgassing rate. The duct section 1 comprises a number of getters 6 for removing outgassed molecules from the space 4 after the pump port 5 is sealed, in order to maintain the pressure of the vacuum at a low enough level to provide sufficient thermal insulation.

In this example, each getter 6 comprises an enclosure in the form of a metal tube containing a getter material, for example, barium. Each metal tube 6 is mounted on the external surface of the inner pipe 3 by suitable mounting means, in this example, a pair of metal cable ties 7, and is activated for use during the steam line commissioning process. Each tube 6 comprises a welded closed end and an open end which defines a port providing communication between the interior of the enclosure and the space. Prior to the tube being activated, the port is closed by a fusible closure in the form of a cap seal (not shown), for example, an indium cap seal. Such getter tubes are known in the art. Other types of getters may also be used instead.

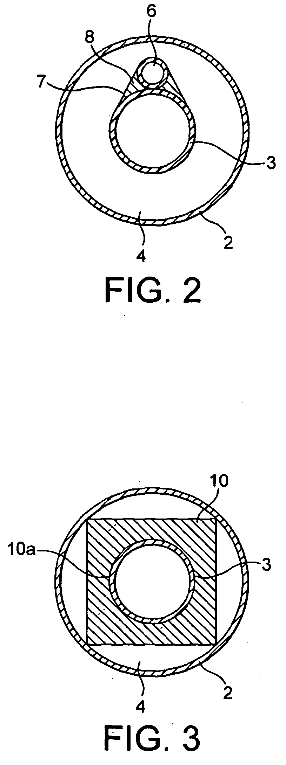

Preferably, in order to provide a good thermal contact between each tube 6 and the inner pipe 3, as is most clearly shown in Figure 3, each tube 6 is located on a saddle 8 resting against the outer surface of the inner pipe 3. Each saddle 8 is preferably made of a material having a high thermal conductivity, for example copper, and has a curved first surface, in contact with the inner pipe 3, having a curvature that compliments the curvature of the inner pipe 3, and a curved recess in a second surface which snugly receives a tube 6.

During the commissioning process, after the pump port 5 is sealed, steam is passed at normal operating pressure and temperature, for example 3.5 barg and 148°C, through the inner pipe 3 heating the getter tubes 6 to fuse the thermal seals and activate the getters.

Preferably, the inner pipe 3 comprises one or more expansion joints 9, spaced apart at suitable intervals along the inner pipe 3, for accommodating heat induced expansion of the inner pipe 3 as it heats up when it conveys steam. In one example, each expansion joint 9 is a flexible metal (e.g. stainless steel) bellows defining a section of the inner pipe 3. Other types of expansion joints may also be used.

The duct section 1 may also comprise a series of rigid supports 10 (only one is illustrated in Figure 1), spaced apart along the inside of the outer pipe 2, which help support the weight of the inner pipe 3. As best illustrated in Figure 3, each support 10 may be in the form of a thin rectangular sheet having a central hole 10a through which the inner pipe 3 passes to form a tight fit between the two. The support 10 is dimensioned so that only its four corners contact the inner surface of the outer pipe 2. This minimal contact provides sufficient support for the inner pipe 3 and minimises heat flow through the support 10 from the inner pipe 3 to the outer pipe 2. Each support 2 comprises a vacuum friendly material of a low thermal conductivity.

To further improve the thermal insulation of the inner pipe 3, it may be wrapped in a suitable vacuum compatible thermally insulating material (not shown), for example, so called 'super insulation' which comprises alternating layers of thin aluminium foil and fibreglass insulation. If the super insulation covers the getters 6, it is advantageous to form holes through the super insulation in the vicinity of the getters 6, of about the same diameter as the getter tubes and at right angles to the end of the getter tube to enable the getters 6 to pump efficiently.

At its ends, the duct section 1 may be provided with suitable connecting means 11, for example, pharmaceutical ferrules (e.g. tri-clamps), for connecting the duct section 1 to additional duct sections to provide a larger steam line, to L bend sections to change the direction of the steam line, or to standard steam line components such as steam traps. The ferrule 11 is shown at the left-hand end of the duct section 1 as shown in Figure 1. The duct section 1 is shown truncated at the right of Figure 1 at the line x, but it will be appreciated that the right hand end of the duct section is similar to the left hand end and is also provided with a connecting means such as the ferrule 11.

An indicator 12 is provided to indicate to a user that the vacuum has failed. While a vacuum is maintained in the space 4, the resulting insulation is sufficiently effective for the outer pipe 2 to remain substantially at ambient temperature when steam at high temperature, e.g. 148°C, flows through the inner pipe 3. For example, the indicator 12, represented schematically in Figure 1, changes appearance in response to the rise in temperature of the outer pipe 2 that would result from increased thermal conduction in the event of a vacuum failure. The indicator 12 is located on the outside of the outer pipe 2. The indicator 12 is a heat sensitive paint or coating such as a liquid crystal indicator coating that changes colour in response to the temperature change. The indicator 12 may be in the form of a company logo or name. Thus, the indicator 12 may have a first appearance, for example colour, when the outer pipe 2 has a temperature in a predetermined range which includes the ambient temperature, but changes appearance, for example changes colour, when the temperature rises above the predetermined range reflecting the increase in temperature that will occur if the vacuum in the space 4 fails.

The indicator 12 shown in Figure 1 is a coating that covers only a small region of the outer pipe 2. In other embodiments, the indicator coating could cover a larger region, for example it could be applied as a band extending entirely around the circumference of the outer pipe 2, or it could cover substantially the entire external surface of the outer pipe 2.

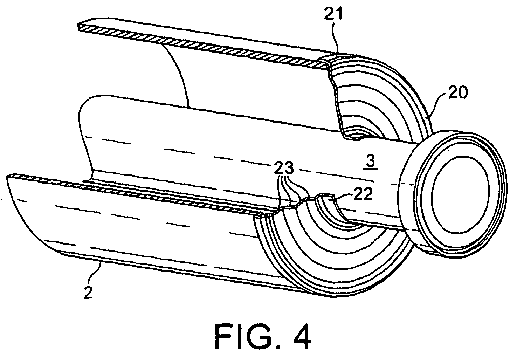

In an alternative embodiment to that illustrated in Figures 1 to 3, as illustrated somewhat schematically in Figure 4, each end of the outer pipe 2 (only one end is shown in Figure 4) is capped and sealed by a flexible annular plate 20 which defines a central aperture through which the inner pipe 3 passes. The outer circumference of the annular plate 20 comprises a first flange 21, which is bent substantially perpendicularly to the face of the plate 20 and is welded to the outer surface of the outer pipe 2, and the inner circumference of the annular plate 20 comprises a second flange 22, which is also bent substantially perpendicularly to the face of the annular plate 20 but in the reverse direction to that of the first flange 21 and is welded to the outer surface of the inner pipe 3. The annular plate 20 further comprises a plurality of annular corrugations or convolutions 23 formed on its face, which are concentric with the aperture. The plate 20 comprises a flexible material, for example a stainless steal sheet the thickness of which is relatively thin compared to the outer pipe 3, and in use, as the inner pipe 3 expands on heating (or contracts on cooling), the corrugations 23 flex (or un-flex) to accommodate this movement. Accordingly, the plate 20 acts as a diaphragm expansion joint. The thickness of the plate 20 in the region of the corrugations 23 may be thinner than it is in the region of the first 21 and second 22 flanges to increase the flexibility of the plate 20 and hence lower the stresses placed on the first 21 and second 22 flanges when heat expansion/contraction occurs.

The use of such a plate 20 negates the requirement to have internal expansion joins such as the bellows described above, which are not always desirable, particularly if the inner pipe 3 has to convey steam at a relatively high pressure.

Advantageously, the corrugations 23 provide for a longer thermal path than would a standard non-corrugated end cap and hence the plate 20 conducts less heat from the inner pipe 3 than would a standard end cap.

One example of a process for commissioning the duct section 1 for use comprises using a vacuum pump (not shown) connected to the pump port 5 to pump gas from the space 4 while the duct section 1 is heated to an elevated temperature, for example, 140 degrees Celsius to drive outgassing of the internal surfaces of the duct section 1. The outer pipe 2 may be heated by any suitable means, for example heater tape, and the inner pipe 3 may be heated by passing steam (or hot air) through it at a suitable pressure, say 2.5 bar. This degassing step continues until the pressure in the space 4 is a pre-determined value, for example 10⁻⁶ mbar. It is important during this degassing step that the temperature is never high enough to activate the getters 6.

Next, the getters 6 are activated by passing steam (or hot air) through the inner pipe 3, the steam having a high enough temperature to heat the inner pipe 3 and the getters 6 to a temperature sufficient to fuse the thermally sensitive end caps. For example, if the end caps were indium, which has a melting point of about 157 degrees Celsius, passing steam through the inner pipe 3 at a pressure of about 14.5 bar and a temperature of about 198 degrees Celsius for around 30 minutes would cause sufficient heating to remove the indium and activate the getters 6. The vacuum pump (not shown) is kept pumping the space 4 until the pressure, which rises as the indium is removed from the getters 6, is reduced back to 10⁻⁶ mbar. Thereafter, the pump port 5 is closed to seal the vacuum, the vacuum pump disconnected and the duct section 1 is ready for operational use.

The duct section 1 may comprise one or more ports (not shown) for a pressure sensor for sensing the pressure of the vacuum during the commissioning process and a mass spectrometer for monitoring the nature of the gases being removed from the space 4.

The length of the duct section 1 and the diameters of the outer pipe 2 and inner pipe 3 will of course depend upon the particular circumstances of the application the steam line is to be used for.

In some embodiments, the space 4 may be pumped by a vacuum pump even when the duct section is on site being put to use for its application. In such cases, the getters 6 may not be needed.

Various modifications may be made to the described embodiment without departing from the scope of the invention defined in the following claims. For example, although the invention has been described in terms of a steam line, it will be appreciated that the duct section may be used to convey other fluids, for example hot liquids. Furthermore, the duct section in accordance with the invention is also suitable for conveying cold fluids, i.e. fluids which are maintained at a temperature below the ambient temperature.

## Claims

1. A duct section (1) for conveying a fluid, comprising an inner pipe (3) for conveying the fluid, an outer pipe (2) enclosing the inner pipe (3) to define a space (4) between the inner pipe (3) and the outer pipe (2), and a connector (5) communicating with the space (4) for evacuating the space (4) to provide thermal insulation for the inner pipe (3), **characterised in that** the external surface of the outer pipe (2) is provided with a temperature-responsive indicator (12) which is a heat sensitive paint or coating which remains in a first state while the temperature of the outer pipe (2) lies within a predetermined temperature range and assumes a second state when the temperature of the outer pipe (2) lies outside the predetermined temperature range.

2. A duct section (1) as claimed in claim 1, **characterised in that** the predetermined temperature range embraces the ambient temperature of the environment in which the duct section (1) is situated.

3. A duct section (1) as claimed in claim 2, **characterised in that** the change in appearance occurs when the temperature of the outer pipe (2) rises above the ambient temperature.

4. A duct section (1) as claimed in any one of claims 1 to 3, **characterised in that** the change in appearance is a change in colour.

5. A duct section (1) as claimed in any one of the preceding claims, **characterised in that** the indicator (12) incorporates a symbol or wording.

6. A duct section (1) according to any one of the preceding claims further comprising at least one getter (6) for removing gas from the vacuum.

7. A duct comprising at least two duct sections (1) connected end to end, **characterised in that** the duct sections (1) are in accordance with any one of the preceding claims.

8. A duct as claimed in claim 7, **characterised in that** the duct sections (1) are connected by way of couplings (11) engaging the inner pipes (3).

9. Use of a duct or duct section (1) in a cleanroom, **characterised in that** the duct or duct section (1) is in accordance with any one of the preceding claims.

## Patentansprüche

1. Leitungssektion (1) zum Befördern eines Fluids, die ein inneres Rohr (3) zum Befördern des Fluids, ein äußeres Rohr (2), welches das innere Rohr (3) umschließt, um einen Raum (4) zwischen dem inneren Rohr (3) und dem äußeren Rohr (2) zu bilden, und einen Verbinder (5), der in Verbindung mit dem Raum (4) steht, um den Raum (4) zu evakuieren, um eine Wärmeisolierung für das innere Rohr (3) bereitzustellen, umfasst, **dadurch gekennzeichnet, dass** die Außenfläche des äußeren Rohrs (2) mit einem temperaturempfindlichen Indikator (12) versehen ist, der eine wärmeempfindliche Farbe oder Beschichtung ist, die in einem ersten Zustand verbleibt, während die Temperatur des äußeren Rohrs (2) innerhalb eines vorbestimmten Temperaturbereichs liegt, und einen zweiten Zustand annimmt, wenn die Temperatur des äußeren Rohrs (2) außerhalb des vorbestimmten Temperaturbereichs liegt.

2. Leitungssektion (1) nach Anspruch 1, **dadurch gekennzeichnet, dass** der vorbestimmte Temperaturbereich die Umgebungstemperatur der Umgebung, in der sich die Leitungssektion (1) befindet, einschließt.

3. Leitungssektion (1) nach Anspruch 2, **dadurch gekennzeichnet, dass** die Veränderung im Erscheinungsbild auftritt, wenn die Temperatur des äußeren Rohrs (2) über die Umgebungstemperatur ansteigt.

4. Leitungssektion (1) nach einem der Ansprüche 1 bis 3, **dadurch gekennzeichnet, dass** die Veränderung im Erscheinungsbild eine Veränderung in der Farbe ist.

5. Leitungssektion (1) nach einem der vorhergehenden Ansprüche, **dadurch gekennzeichnet, dass** der Indikator (12) ein Symbol oder eine Beschriftung einschließt.

6. Leitungssektion (1) nach einem der vorhergehenden Ansprüche, die ferner wenigstens einen Getter (6) zum Entfernen von Gas aus dem Vakuum umfasst.

7. Leitung, die wenigstens zwei Leitungssektionen (1), die Ende an Ende verbunden sind, umfasst, **dadurch gekennzeichnet, dass** die Leitungssektionen (1) nach einem der vorhergehenden Ansprüche sind.

8. Leitung nach Anspruch 7, **dadurch gekennzeichnet, dass** die Leitungssektionen (1) mit Hilfe von Kupplungen (11), welche die inneren Rohre (3) in Eingriff nehmen, verbunden sind.

9. Verwendung einer Leitung oder Leitungssektion (1) in einem Reinraum, **dadurch gekennzeichnet, dass** die Leitung oder Leitungssektion (1) nach einem der vorhergehenden Ansprüche ist.

## Revendications

1. Tronçon de conduit (1) pour transporter un fluide, comprenant un tuyau intérieur (3) pour transporter le fluide, un tuyau extérieur (2) enfermant le tuyau intérieur (3) pour définir un espace (4) entre le tuyau intérieur (3) et le tuyau extérieur (2), et un connecteur (5) communiquant avec l'espace (4) pour évacuer l'espace (4) pour pourvoir une isolation thermique pour le tuyau intérieur (3), **caractérisé en ce que** la surface extérieure du tuyau extérieur (2) est pourvu d'un indicateur sensible à la température (12) qui est une peinture ou un revêtement sensible à la chaleur qui reste dans un premier état le temps que la température du tuyau extérieur (2) est dans une plage de températures prédéterminée et change en un second état lorsque la température du tuyau extérieur (2) est en dehors de la plage de températures prédéterminée.

2. Tronçon de conduit (1) selon la revendication 1, **caractérisé en ce que** la plage de températures prédéterminée comprend la température ambiante de l'environnement dans lequel le tronçon de conduit (1) est placé.

3. Tronçon de conduit (1) selon la revendication 2, **caractérisé en ce que** le changement d'aspect intervient lorsque la température du tuyau extérieur (2) augmente au-delà de la température ambiante.

4. Tronçon de conduit (1) selon l'une des revendications 1 à 3, **caractérisé en ce que** le changement d'aspect est un changement de couleur.

5. Tronçon de conduit (1) selon l'une quelconque des revendications précédentes, **caractérisé en ce que** l'indicateur (12) incorpore un symbole ou un texte.

6. Tronçon de conduit (1) selon l'une quelconque des revendications précédentes, comprenant en outre au moins un adsorbeur (6) pour enlever du gaz du vide.

7. Conduit comprenant au moins deux tronçons de conduit (1) connectés bout à bout, **caractérisé en ce que** les tronçons de conduit (1) sont conformes à l'une quelconque des revendications précédentes.

8. Tronçon de conduit (1) selon la revendication 7, **caractérisé en ce que** les tronçons de conduit (1) sont connectés à l'aide d'accouplements (11) engageant les tuyaux intérieurs (3).

9. Utilisation d'un conduit ou d'un tronçon de conduit (1) dans une salle blanche, **caractérisée en ce que** le conduit ou le tronçon de conduit (1) est conforme à l'une quelconque des revendications précédentes.
